# EUROPÄISCHE PATENTANMELDUNG

(11) **EP 1 152 271 A2**
(43) Veröffentlichungstag der Anmeldung: **07.11.2001**
(21) Anmeldenummer: 01110489.0
(22) Anmeldetag: 27.04.2001
(51) Int. Cl.: G02B 6/36, G02B 6/42, H01R 4/28, F16L 3/00, B60M 1/24

(54) **LWL-Klemme**

(30) Priorität: 05.05.2000 DE 10021882
(71) Anmelder: Wago Verwaltungsgesellschaft mbH, 32423 Minden (DE)
(72) Erfinder: Köllmann, Hans-Josef, 32425 Minden (DE); Hennemann, Lothar-Roland, 32130 Enger (DE)
(74) Vertreter: Lange, Gerd, Dipl.-Ing.

(57) **Zusammenfassung**

Die Erfindung betrifft eine Klemme für Lichtwellenleiter, die mittels einer Klemmfeder (11) in einem Leitungseinführungskanal des Klemmengehäuses (5) festgeklemmt werden. Es wird zu diesem Zweck die bekannte Käfigzugfederanschlußtechnik verwendet, und es wird vorgeschlagen, das Klemmschenkelendstück (15) der Klemmfeder mit einer dort ausgestanzten Klemmlasche (17) als Klemm- und Schubelement für den Lichtwellenleiter auszubilden in der Weise, daß das Klemmschenkelendstück über eine Gleitkurve (18) im Klemmengehäuse gesteuert wird und die Klemmlasche in sich und/oder in ihrem Ansteliwinkel α zum Klemmschenkelendstück federnde Eigenschaften aufweist.

## Beschreibung

Die Erfindung betrifft eine Klemme mit einem Klemmengehäuse und einem in dem Klemmengehäuse vorhandenen Leitereinführungskanal zum Anschließen eines Lichtwellenleiters (= LWL) an die Signalübertragungsfläche (Signaleingangsfläche oder Signalausgangsfläche) des Signalports eines optoelektronischen Wandlers (im Regelfall eine gut modulierbare Si-Diode als Empfänger oder als Sender) oder an die Stirnfläche eines zweiten, auf Länge geschnittenen Lichtwellenleiters.

Klemmen dieses Typs für Lichtwellenleiter sind z.B. aus der DE 29 07 705 C2 bekannt und folgen in ihrem grundsätzlichen Aufbau dem Aufbau der Klemmen für elektrische Kupferleiter. Das ist naheliegend, denn im Bereich der Daten- und Signalübertragungstechnik sind die Lichtwellenweiter die technologischen Nachfolger der herkömmlichen Kupferleiter. In der Fachwelt spricht man von einem übertragungstechnischen Äquivalent, das sich zwischen einem Glas-Lichtwellenleiter und einem Kupfer-Leiter mit 1:1000 darstellt, d.h. mit 1 kg Glas können dieselben Übertragungsleistungen erreicht werden wie mit 1000 kg Kupferleitung. Dieses übertragungstechnische Äquivalent wird bei einem Lichtwellenleiter, wenn dieser aus relativ leichtem Kunststoff gefertigt ist, noch ungünstiger zu Lasten der herkömmlichen Kupfer-leiter.

Im Prinzip sind Lichtwellenleiter genau so zu klemmen wie Kupferleiter. In beiden Fällen werden für die Klemmen Klemmengehäuse mit einem Leitereinführungskanal verwendet, in den der Leiter eingesteckt und mittels einer der bekannten Bauformen von Klemmfedern geklemmt wird. Vergleiche hierzu die Bauform einer sogenannten Käfigzugfeder gemäß Fig. 4 der DE 27 60 179 C2 für einen Kupferleiter mit derselben Bauform einer Käfigzugfeder gemäß Fig. 5 der DE 198 31 851 C1 für einen Lichtwellenleiter.

Nachteilig ist jedoch bei der in der DE 198 31 851 C1 beschriebenen Käfigzugfeder, daß diese nicht in der Lage ist, die Stirnfläche des auf Länge geschnittenen und in den Leitereinführungskanal der Klemme eingeführten Lichtwellenleiters gegen die Signalübertragungsfläche des Signalports des optoelektronischen Wandlers zu drücken, wie dies funktionsgemäß bereits in der DE 29 07 705 C2 als notwendig erkannt ist.

In der Praxis muß davon ausgegangen werden, daß die von Hand in die Leitereinführungskanäle der Klemmen eingeführten Leiter nicht stets und sorgfältig genug bis zum Endanschlag positioniert und in dieser Position gehalten werden, und zwar bis die Klemmstelle zur Festklemmung des Leiters in dem Leitereinführungskanal geschlossen ist. Eine geringe Fehlpositionierung der endseitigen Stirnfläche des Lichtwellenleiters in Bezug auf seine konstruktiv vorgegebene Endposition bewirkt bereits einen Spaltabstand in der Größenordnung von Bruchteilen eines Millimeters zwischen der Stirnfläche des Lichtwellenleiters und der Signalübertragungsfläche des Signalports eines Wandlers, und dies reicht aus, um bei der Übertragung der Lichtwellen erhebliche Streuverluste und/oder Dämpfungsverluste auftreten zu lassen.

Aufgabe der vorliegenden Erfindung ist es, eine Klemme zum Anschließen eines Lichtwellenleiters mit den Merkmalen des Oberbegriffs des Anspruches 1 so weiterzuentwickeln, daß in der Praxis mit der Käfigzugfederanschlußtechnik in fast allen Fällen ein dämpfungsund streuverlustfreier Lichtwellenleiteranschluß hergestellt werden kann.

Diese Aufgabe wird erfindungsgemäß dadurch gelöst, daß das Klemmschenkelendstück einer in Art einer Käfigzugfeder ausgeführten Klemmfeder als Klemm- und Schubelement ausgebildet ist in der Weise, daß die aus dem Klemmschenkelendstück ausgestellte Klemmlasche in sich und/oder in ihrem Anstellwinkel ∝ zum Klemmschenkelendstück federnde Eigenschaften aufweist, daß weiterhin die Klemmfeder in dem Klemmengehäuse mit einer Vorspannung des Klemmschenkelendstücks relativ zum Klemmschenkelrücken eingebaut ist derart, daß das Klemmschenkelendstück an einer Gleitkurve des Klemmengehäuses anliegt und daß die Gleitkurve das Klemmschenkelendstück beim öffnen oder Schließen der Klemmstelle derart steuert, daß die an dem Lichtwellenleiter anliegende Klemmlasche eine Vorschubkraft auf den Lichtwellenleiter in Richtung der Leitereinführung ausübt.

Die erfindungsgemäße Lösung gewährleistet, daß selbst bei einem etwas nachlässigen und ungenauen Positionieren des Lichtwellenleiters in dem Leitereinführungskanal der Klemme dennoch eine exakte Anlage der Stirnfläche des Lichtwellenleiters z.B. gegen die Signalübertragungsfläche des Signalports eines optoelektronischen Wandlers automatisch erzwungen wird. Anhand der nachfolgenden Zeichnungen wird das noch genauer beschrieben.

Dabei ist zudem von Vorteil, daß die Vorschubkraft auf den Lichtwellenleiter in Richtung der Leiterinführung auch auf einen bereits geklemmten Lichtwellenleiter während der gesamten Betriebsdauer der Klemme permanent ausgeübt wird, da sich die Klemmfeder aufgrund ihrer vorhandenen Vorspannungen sowohl im Klemmschenkelrücken (relativ zu der im Klemmengehäuse festgelegten Federwurzel der Klemmfeder) als auch im Klemmschenkelendstück (relativ zum Klemmschenkelrücken) immer selbst nachstellt. So können auch später auftretende Wärmedehnungen des Materials und/oder gelegentlich auftretende erhöhte Zugkräfte auf den Lichtwellenleiter wieder ausgeglichen werden, so daß Störungen in der Qualität der Daten- und Signalübertragung vermieden werden.

Grundsätzlich bietet sich im Rahmen der Lehre der Erfindung an, die Vorspannung des Klemmschenkelendstücks relativ zum Klemmschenkelrücken der Klemmfeder in die eine oder andere Richtung zu wählen. Bei einer Vorspannung in Richtung der Leitereinführung muß die Gleitkurve des Klemmengehäuses das Klemmschenkelendstück so steuern, daß dieses beim öffnen der Klemmstelle entgegen seiner Vorspannung bewegt wird, um sich dann beim Schließen der Klemmstelle in Richtung der Leitereinführung bewegen zu können, um so mittels der aus dem Klemmschenkelendstück ausgestellten und an dem Lichtwellenleiter anliegenden Klemmlasche eine Vorschubkraft auf den Leiter aufbringen zu können.

Der umgekehrte Fall, bei dem das Klemmschenkelendstück entgegengerichtet der Leitereinführungsrichtung vorgespannt ist (siehe hierzu Anspruch 2) ist in der Praxis ebenfalls sehr gut ausführbar und wird nachfolgend als Ausführungsbeispiel anhand der Zeichnungen genauer beschrieben.

Noch eine weitere Besonderheit muß bei dem Aufbringen von Klemm- und Schubkräften auf einen Lichtwellenleiter beachtet werden. Der Kern des Lichtwellenleiters besteht aus einer Glas- oder Kunststoffaser und diese reagiert auf kleinste Kratzer oder Kerbungen oder sonstige Beschädigungen ihrer Oberflächenbeschaffenheit mit erheblich verschlechterten Dämpfungswerten. Deshalb sind der oder die Kernfasern eines Lichtwellenleiters meist durch eine zusätzliche Schutzhülle unterhalb des Außenmantels des Lichtwellenleiters geschützt. Es muß dafür Sorge getragen werden, daß weder die Schutzhülle noch der Außenmantel des Lichtwellenleiters durch das Ansetzen der Klemmkante des Klemm- und Schubelementes durchtrennt wird. Gleichwohl muß eine Verkrallung der Klemmkante in dem Außenmantel erfolgen, da sonst eine Vorschubkraft auf den Lichtwellenleiter in Richtung der Leitereinführung nicht aufzubringen wäre.

Dieses Problem wird bei dem erfindungsgemäßen Klemm- und Schubelement dadurch gelöst, daß die aus dem Klemmschenkelendstück ausgestellte Klemmlasche benachbart zu ihrer endseitigen Klemmkante eine in Richtung der Klemmkante vorstehende Anlagefläche besitzt, die die Eindringtiefe der Klemmkante in den Außenmantel des Lichtwellenleiters begrenzt (Siehe hierzu Anspruch 3). Dieser Eindringschutz wirkt bei einer Klemmlasche besonders gut, die gemäß der Lehre der Erfindung in sich und/oder in ihrem Anstellwinkel ∝ zum Klemmschenkelendstück federnde Eigenschaften besitzt. Jede Erhöhung der Klemmkraft bewirkt ein federndes Ausweichen der Klemmlasche z.B. in ihrem Anstellwinkel ∝ zum Klemmschenkelendstück mit der Folge, daß sich die vorstehende Anlagefläche der Klemmlasche an den Außenmantel des Lichtwellenleiters anlegt und dadurch die Klemmkante der Klemmlasche infolge der Veränderung des Anstellwinkels aus dem Außenmantel des Lichtwellenleiters etwas zurückgezogen wird oder zumindest ein weiteres Eindringen der Klemmkante in den Außenmantel des Lichtwellenleiters verhindert wird.

Nachfolgend wird ein Ausführungsbeispiel der Erfindung anhand der Zeichnungen näher beschrieben. Es zeigen:
- Fig. 1 bis 3: Funktionsschaubilder einer
erfindungsgemäßen Klemme in der zeitlichen Abfolge beim Anschließen eines Lichtwellenleiters,
- Fig. 4: in perspektivischer Darstellung die Klemmfeder gemäß den Figuren 1 bis 3.

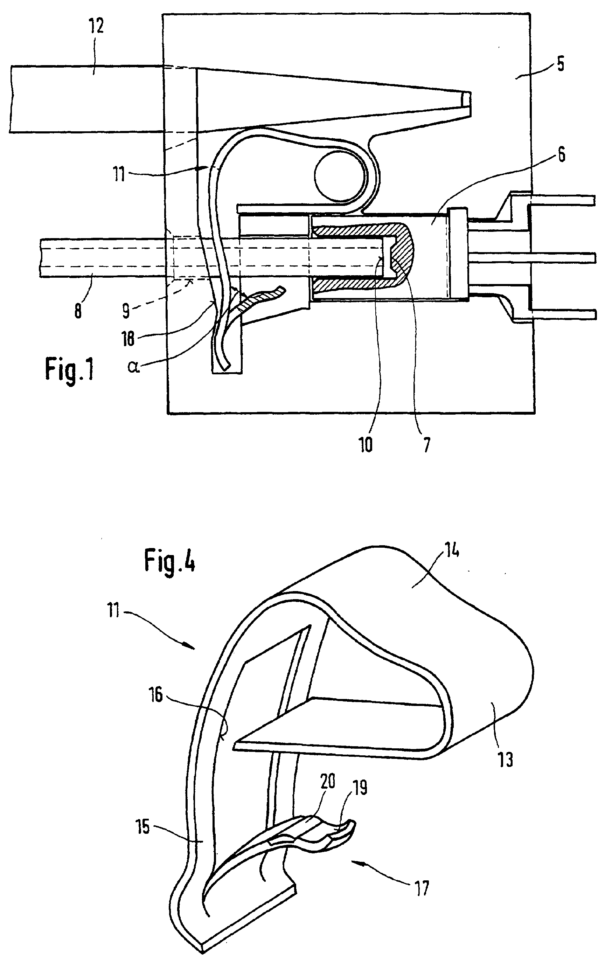

Fig. 1 zeigt in einer vereinfachten Seitenansicht das Klemmengehäuse 5 einer LWL-Klemme, in das ein handelsüblicher optoelektronischer Wandler 6 eingebaut ist, der eine in seinem Signalport versenkt angeordnete Signalübertragungsfläche 7 besitzt. Diese Signalübertragungsfläche steht über die Grundfläche des Signalports vor und hat zum äußeren Umfang des Signalports eine deutliche Randfreiheit, um zu erreichen, daß die lichtwellenleitende Kernfaser des LWL 8 mit einem "dichten" Anlagekontakt an der Signalübertragungsfläche 7 anliegen kann und daran nicht durch evtl. vorstehendes Material des Außenmantels des LWL 8 gehindert wird.

Der LWL 8 ist (wie in Fig. 1 dargestellt) in den Leitereinführungskanal 9 des Klemmengehäuses eingeführt und befindet sich in der Darstellung gemäß Fig. 1 in einer Fehlpositionierung derart, daß seine endseitige Stirnfläche 10 in einem deutlichen Abstand zur Signalübertragungsfläche 7 positioniert ist, was in der Praxis bei einem in dem Leitereinführungskanal 9 festgeklemmten Lichtwellenleiter vermieden werden muß.

Bevor der LWL in den Leitereinführungskanal des Klemmengehäuses eingeführt werden kann, muß die durch die Klemmfeder 11 gebildete Klemmstelle geöffnet sein. Dies erfolgt in der üblichen und bekannten Weise mittels der Klinge eines Schraubendrehers 12, der über eine Betätigungsöffnung in das Klemmengehäuse axial eingesteckt wird und dadurch den oberen Klemmschenkelrücken der Klemmfeder niederdrückt, wie dies in Fig. 1 dargestellt ist.

Die genaueren Details der Klemmfeder 11 sind in Fig. 4 dargestellt. Die Klemmfeder ist aus einem flachen Blattmaterial gefertigt und ist mit ihrem rückwärtigen Teil (= Federwurzel 13) in dem Klemmengehäuse festgelegt, und sie besitzt von ihrer Federwurzel ausgehend einen Klemmschenkel, der sich zunächst mit seinem Klemmschenkelrücken 14 ein stückweit etwa in Richtung und neben dem Leitereinführungskanal 9 (siehe Fig. 1) erstreckt und der sich sodann nach einem etwa 90°-Bogen mit seinem Klemmschenkelendstück 15 im wesentlichen quer durch den Leitereinführungskanal 9 (siehe Fig. 1) hindurcherstreckt, wobei das Klemmschenkelendstück 15 im Bereich der Kanalquerung eine Fensterausnehmung 16 aufweist, durch die sich der in den Leitereinführungskanal eingesteckte LWL 8 hindurcherstreckt derart, daß die unterseitige Begrenzung der Fensterausnehmung den LWL gegen die oberseitige Wandung des Leitereinführungskanals festklemmt, und wobei die unterseitige Begrenzung der Fensterausnehmung 16 durch eine aus dem Flachmaterial des Klemmschenkelendstücks 15 ausgestanzte Klemmlasche 17 gebildet ist.

Das Klemmschenkelendstück 15 mit der Klemmlasche 17 ist nach der Lehre der Erfindung als Klemm- und Schubelement ausgebildet in der Weise, daß die aus dem Klemmschenkelendstück ausgestellte Klemmlasche in sich und/oder in ihrem Anstellwinkel ∝ zum Klemmschenkelendstück (siehe hierzu Fig. 1) federnde Eigenschaften aufweist, wobei weiterhin die Klemmfeder in dem Klemmengehäuse mit einer Vorspannung des Klemmschenkelendstücks 15 relativ zum Klemmschenkelrücken 14 eingebaut ist derart, daß das Klemmschenkelendstück an einer Gleitkurve 18 des Klemmengehäuses anliegt, wie dies nachfolgend noch näher erläutert wird.

Die in Fig. 4 dargestellte Klemmfeder besitzt endseitig an ihrer Klemmlasche eine Klemmkante 19 zur Anlage und Verkrallung in den Außenmantel des LWL 8. Benachbart zu dieser Klemmkante besitzt die Klemmlasche 17 eine in Richtung der Klemmkante vorstehende Anlagefläche 20, die die Eindringtiefe der Klemmkante 19 in den Außenmantel des LWL begrenzt.

Die Wirkungsweise des Klemm- und Schubelementes (gebildet aus dem vorgenannten Klemmschenkelendstück 15 in Kombination mit den speziellen Eigenschaften der Klemmlasche 17) erschließt sich dem Leser aus der Betrachtung der Funktionsabfolge gemäß den Figuren 1 bis 3.

Fig. 1 zeigt die vollständig geöffnete Klemmstelle, erkennbar daran, daß die Klinge des Schraubendrehers 12 vollständig in das Klemmengehäuse eingesteckt worden ist. Beim öffnen der Klemmstelle, d.h. beim Niederdrücken des Klemmschenkelrückens 14 gleitet das Klemmschenkelendstück 15 an der Gleitkurve 18 entlang. Um dies zu erreichen, besitzt das Klemmschenkelendstück 15 relativ zum Klemmschenkelrücken 14 eine fertigungstechnische Vorspannung und ist mit dieser Vorspannung in das Klemmengehäuse eingebaut, so daß das Klemmschenkelendstück 15 stets an der Gleitkurve 18 anliegt und von dieser gesteuert wird.

Die Steuerung ist derart, daß das Klemmschenkelendstück 15 der Klemmfeder in Fig. 1 am weitesten nach links (darstellungsgemäß) ausgefedert ist.

Zugleich ist in Fig. 1 die federnd ausgebildete Klemmlasche 17 frei von allen äußeren Krafteinwirkungen, so daß der Anstellwinkel ∝ (siehe Fig. 1) relativ klein und die Klemmlasche 17 relativ steil gegen den LWL 8 gerichtet ist.

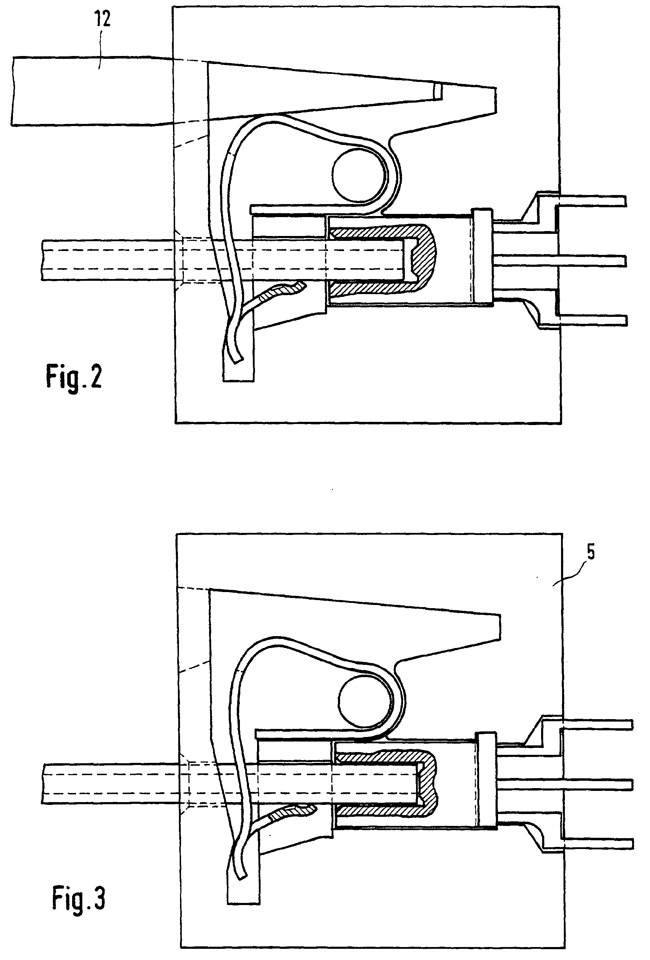

Fig. 2 zeigt ein Zwischenstadium der Funktionsabfolge, in dem die Klinge des Schraubendrehers 12 gerade so weit aus dem Klemmengehäuse zurückgezogen ist, daß die Klemmkante 19 der Klemmlasche 17 zur Anlage an den Außenmantel des LWL 8 gekommen ist und sich in dem Außenmantel verkrallt hat. Dabei ist die Klemmlasche 17 in ihrem Anstellwinkel ∝ zum Klemmschenkelendstück 15 etwas aufgefedert. Das Klemmschenkelendstück 15 liegt an der Gleitkurve 18 in einem Bereich der Gleitkurve an, in der diese beginnt, das Klemmschenkelendstück 15 darstellungsgemäß nach rechts zu bewegen.

In Fig. 3 ist der Endzustand erreicht, erkennbar daran, daß nunmehr der Schraubendreher 12 vollständig aus dem Klemmengehäuse herausgezogen worden ist und demzufolge die Klemmstelle zwischen der Klemmlasche 17 und dem Lichtwellenleiter 8 geschlossen ist. In diesem Zustand ist die Klemmlasche 17 am weitesten nach rechts ausgefedert, d.h. der Anstellwinkel ∝ zum Klemmschenkelendstück 15 ist am größten. Dies bringt zugleich die Anlagefläche 20 der Klemmlasche 17 bis zu einer beginnenden Anlage an den Außenmantel des LWL 8 heran, wodurch garantiert ist, daß die Anlagefläche 20 die Eindringtiefe der Klemmkante 19 in den Außenmantel des LWL begrenzt.

Zugleich hat in der Darstellung gemäß Fig. 3 die Gleitkurve 18 das Klemmschenkelendstück 15 maximal nach rechts gesteuert, wodurch bewirkt ist, daß der LWL 8 mit seiner endseitigen Stirnfläche 10 zur streuverlustfreien und dämpfungsverlustfreien "dichten" Anlage an die Signalübertragungsfläche 7 des Signalports des optoelektronischen Wandlers 6 gekommen ist.

## Patentansprüche

1. Klemme
- mit einem Klemmengehäuse und einem Leitereinführungskanal zum Anschließen eines Lichtwellenleiters (LWL) an die Signalübertragungsfläche des Signalports eines optoelektronischen Wandlers oder an die Stirnfläche eines zweiten, auf Länge geschnittenen Lichtwellenleiters,
- der erstgenannte Lichtwellenleiter ist in einer Klemmstelle im Leitereinführungskanal mittels einer Klemmfeder festgeklemmt,
- die Klemmfeder ist aus einem flachen Blattmaterial gefertigt und ist mit ihrem rückwärtigen Teil (= Federwurzel) in dem Klemmengehäuse festgelegt, und sie besitzt von ihrer Federwurzel ausgehend einen Klemmschenkel, der sich zunächst mit seinem Klemmschenkelrücken ein stückweit etwa in Richtung und neben dem Leitereinführungskanal erstreckt und der sich sodann nach einem etwa 90°-Bogen mit seinem Klemmschenkelendstück im wesentlichen quer durch den Leitereinführungskanal hindurcherstreckt,
- wobei das Klemmschenkelendstück im Bereich der Kanalquerung eine Fensterausnehmung aufweist, durch die sich ein in den Leitereinführungskanal eingesteckter LWL hindurcherstreckt derart, daß die unterseitige Begrenzung der Fensterausnehmung den LWL gegen die oberseitige Wandung des Leitereinführungskanals festklemmt,
- und wobei die unterseitige Begrenzung der Fensterausnehmung durch eine aus dem Flachmaterial des Klemmschenkelendstücks ausgestanzte Klemmlasche gebildet ist, die in Richtung der Leitereinführung aus dem Klemmschenkelendstück ausgestellt ist und die bei geschlossener Klemmstelle mit ihrer endseitigen Klemmkante an dem LWL anliegt,
**dadurch gekennzeichnet,**
- **daß** das Klemmschenkelendstück (15) mit der Klemmlasche (17) als Klemm- und Schubelement ausgebildet ist in der Weise,
- **daß** die an dem Klemmschenkelendstück ausgestellte Klemmlasche in sich und/oder in ihrem Anstellwinkel ∝ zum Klemmschenkelendstück federnde Eigenschaften aufweist,
- **daß** weiterhin die Klemmfeder in dem Klemmengehäuse mit einer Vorspannung des Klemmschenkelendstücks (15) relativ zum Klemmschenkelrücken (14) eingebaut ist derart, daß das Klemmschenkelendstück an einer Gleitkurve (18) des Klemmengehäuses anliegt,
- und **daß** die Gleitkurve das Klemmschenkelendstück beim öffnen oder Schließen der Klemmstelle derart steuert, daß die an dem LWL (8) anliegende Klemmlasche (17) eine Vorschubkraft auf den LWL in Richtung der Leitereinführung ausübt.

2. Klemme nach Anspruch 1,
**dadurch gekennzeichnet,**
- **daß** die Vorspannung des Klemmschenkelendstücks (15) relativ zum Klemmschenkelrücken (14) der Leitereinführungsrichtung entgegengerichtet ist.

3. Klemme nach Anspruch 1,
**dadurch gekennzeichnet,**
- **daß** die Klemmlasche (17) benachbart zu ihrer endseitigen Klemmkante (19) eine in Richtung der Klemmkante vorstehende Anlagefläche (20) besitzt, die die Eindringtiefe der Klemmkante in den Außenmantel des LWL begrenzt.
